# FASCICULE DE BREVET EUROPEEN

(11) **EP 3 364 488 B1**
(45) Date de publication et mention de la délivrance du brevet: **18.12.2019**
(21) Numéro de dépôt: 17210879.7
(22) Date de dépôt: 28.12.2017
(51) Int. Cl.: H01M 10/0562, H01M 10/0525, H01M 10/04

(54) **PROCÉDÉ DE FABRICATION D'UNE BATTERIE AU LITHIUM**
HERSTELLUNGSVERFAHREN EINER LITHIUMBATTERIE
METHOD FOR MANUFACTURING A LITHIUM BATTERY

(30) Priorité: 16.02.2017 FR 1751264
(43) Date de publication de la demande: 22.08.2018
(73) Titulaire: STMicroelectronics (Tours) SAS, 37100 Tours (FR)
(72) Inventeur: LADROUE, Julien, 37380 MONNAIE (FR); PIERRE, Fabien, 37390 CHARENTILLY (FR)
(74) Mandataire: Cabinet Beaumont

(56) Documents cités:
- WO-A1-2015/112986
- US-A1- 2013 280 581
- US-A1- 2015 194 700

## Description

### Domaine

La présente demande concerne un procédé de fabrication d'une batterie au lithium.

### Exposé de l'art antérieur

Il est connu d'utiliser des batteries au lithium dans des dispositifs électroniques tels que des ordinateurs portables, des téléphones portables, des tablettes numériques.

Il existe plusieurs types de batteries au lithium, comme les batteries lithium-ion, les batteries lithium-polymère ou les batteries lithium-métal. Chacun de ces types de batteries est caractérisé par les matériaux composant les différents éléments de la batterie. Plus particulièrement, les batteries lithium-ion peuvent être formées d'une cathode en un composé lithié tel que le dioxyde de cobalt de lithium (LiCoO₂), d'un électrolyte en phosphate de lithium nitruré (LiPON) et d'une anode en lithium. Le LiPON est un électrolyte solide permettant la réalisation de batteries au lithium fines et souples. Le document WO2015/112986 décrit un procédé de fabrication d'une batterie au lithium comprenant le dépôt par plasma d'un électrolyte de LiPON sur une structure comprenant une zone de prise de contact d'anode et une zone de prise de contact de cathode.

L'avancée de la technique amène à réaliser des batteries de plus en plus petites, ce qui pose divers problèmes de fabrication.

### Résumé

Un objet d'un mode de réalisation est de pallier tout ou partie des inconvénients des batteries au lithium existantes.

Ainsi, un mode de réalisation prévoit un procédé de fabrication d'une batterie au lithium comprenant le dépôt par plasma de LiPON sur une structure comprenant une zone de prise de contact d'anode et une zone de prise de contact de cathode, comprenant les étapes suivantes : avant le dépôt de LiPON, prévoir des portions conductrices court-circuitant la zone de prise de contact d'anode et la zone de prise de contact de cathode ; et après le dépôt de LiPON, couper lesdites portions.

Selon un mode de réalisation, la batterie comprend une cathode en LiCoO₂.

Selon un mode de réalisation, la batterie comprend une anode en lithium.

Selon un mode de réalisation, les zones de prise de contact d'anode et de cathode sont en platine.

Selon un mode de réalisation, la batterie comprend en outre entre l'anode et la zone de prise de contact d'anode une couche de métal (19).

Selon un mode de réalisation, la couche de métal est en cuivre.

Selon un mode de réalisation, la batterie a une forme rectangulaire.

Selon un mode de réalisation, la zone de prise de contact d'anode et la zone de prise de contact de cathode sont disposées dans des coins opposés de la batterie.

Selon un mode de réalisation, la zone de prise de contact d'anode et la zone de prise de contact de cathode sont disposées dans des coins adjacents de la batterie.

Selon un mode de réalisation, les portions conductrices sont coupées pendant une étape de gravure du LiPON.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
Les figures 1A et 1B sont des vues en coupe d'une batterie au lithium ;
les figures 2A, 2B et 3 sont une vue de dessus et des vues en coupe illustrant des étapes d'un procédé de fabrication de la batterie des figures 1A et 1B ; et
les figures 4A, 4B, 5, 6A et 6B sont des vues en coupe et des vues de dessus illustrant des étapes d'un mode de réalisation d'un procédé de fabrication de la batterie des figures 1A et 1B.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

Dans la description qui suit, lorsque l'on fait référence à des qualificatifs de position absolue, tels que les termes "gauche" et "droite", etc., ou relative, tels que les termes "supérieur", "inférieur", etc., il est fait référence à l'orientation des figures dans une position normale d'utilisation. Sauf précision contraire, l'expression "de l'ordre de" signifie à 10 % près, de préférence à 5 % près.

Par convention, pour une batterie, le terme "anode" représente l'électrode négative et le terme "cathode" représente l'électrode positive.

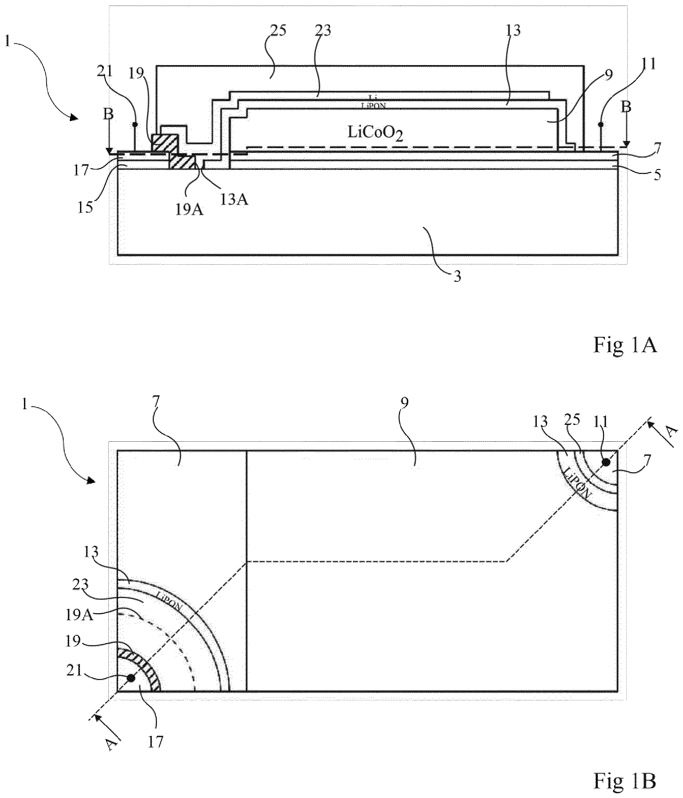

Les figures 1A et 1B sont respectivement une vue en coupe de côté et une vue en coupe de dessus d'une batterie au lithium 1. La figure 1A est une vue en coupe de la batterie 1 selon la ligne brisée A-A de la figure 1B. La figure 1B est une vue en coupe de la batterie 1 selon la ligne brisée B-B de la figure 1A.

Comme cela est représenté en figure 1A, la batterie 1 est formée sur un substrat diélectrique 3. Le substrat 3 est par exemple en dioxyde de zirconium (ZrO₂).

Sur la plus grande partie du substrat 3 (à droite sur les figures) est disposée une couche conductrice 7, éventuellement sur une couche d'accrochage 5. La couche conductrice 7 est en un métal, par exemple du platine, et a une épaisseur comprise entre 50 nm et 10 µm, par exemple de l'ordre de 100 nm. La couche d'accrochage 5 est en oxynitrure de cobalt de lithium (LiCoON) et a une épaisseur comprise entre 50 nm et 10 µm, par exemple de l'ordre de 1 µm. La couche conductrice 7 est une couche de contact de cathode. Sur la plus grande partie de la couche 7 repose une couche de cathode 9, par exemple en dioxyde de cobalt et de lithium (LiCoO₂). La couche de cathode a une épaisseur comprise entre 2 µm et 50 µm, par exemple de l'ordre de 10 µm. L'autre partie de la couche conductrice 7, mieux visible en figure 1B, constitue la zone de prise de contact de la cathode 11.

Sur la couche de cathode 9 repose une couche d'électrolyte 13 en oxynitrure de phosphore et de lithium (LiPON). La couche d'électrolyte 13 déborde d'un côté sur la couche conductrice 7 (à droite de la couche 9 sur les figures) et de l'autre sur le substrat 3 (à gauche de la couche 9 sur les figures). La couche d'électrolyte 13 a une épaisseur comprise entre 500 nm et 5 µm, par exemple de l'ordre de 2 µm.

Sur une petite partie du substrat 3 (à gauche sur les figures) est disposée une couche conductrice 17, éventuellement sur une couche d'accrochage 15. La couche conductrice 17 est éventuellement en un métal de même nature que la couche conductrice 7. La couche d'accrochage 15 est éventuellement de même nature que la couche d'accrochage 5. Une couche 19 en un métal, par exemple en cuivre, repose à cheval sur une extrémité de la couche conductrice 17 et sur le substrat 3. De plus, l'extrémité 19A de la couche 19 est distante de l'extrémité 13A de la couche d'électrolyte 13 pour éviter les altérations de l'extrémité de la couche 13. La couche en métal 19 a une épaisseur comprise entre 50 nm et 10 µm, par exemple de l'ordre de 500 nm. La couche en métal 19 est hachurée sur toutes les figures. La partie libre de la couche 17 constitue la zone de prise de contact de l'anode 21. La couche de platine 17 et la couche de cuivre 19 constituent le contact d'anode.

Une couche d'anode 23 en lithium recouvre la plus grande partie de la couche d'électrolyte 13. De plus, comme cela est représenté sur la figure 1B, la couche d'anode 23 déborde sur la couche en métal 19, l'extrémité 19A étant symbolisée par des pointillés. La couche d'anode 23 a une épaisseur comprise entre 50 nm et 20 µm, par exemple de l'ordre de 5 µm.

Une encapsulation 25 recouvre les différents éléments de la batterie en ne laissant accessibles que les zones de prise de contact de cathode et d'anode 11 et 21. L'encapsulation 25 est par exemple constituée d'un film de polytéréphtalate d'éthylène (PET) recouvert d'un film d'aluminium, aussi connu sous l'abréviation PET-alu, auquel est ajouté un film adhésif sur le côté aluminium. L'encapsulation 25 est par exemple déposée par laminage. L'encapsulation 25 a une épaisseur comprise entre 5 µm et 150 µm, par exemple de l'ordre de 100 µm.

La figure 1B représente un exemple de topologie de la batterie 1 et de ses contacts. La batterie 1 a par exemple une forme rectangulaire et peut avoir une longueur comprise entre 1 et 25 mm, par exemple 11 mm, et une largeur comprise entre 1 et 25 mm, par exemple 6 mm. La zone de prise de contact de cathode 11 est, par exemple, disposée dans le coin supérieur droit de la batterie 1. La zone de prise de contact d'anode 21 est, par exemple, disposée dans le coin inférieur gauche de la batterie 1. Les zones de prise de contact de cathode et d'anode sont par exemple en forme de quadrant. A titre d'exemple, la batterie 1 pourrait comprendre des languettes ou des saillies de formes diverses sur lesquelles pourraient reposer les bornes d'anode et de cathode. Ces languettes ou saillies pourraient par exemple faciliter l'empilement et la connexion en parallèle ou en série de plusieurs batteries.

La réalisation des motifs présentés peut être obtenue en réalisant un motif localisé lors du dépôt (par exemple avec une technique de pochoir), ou en réalisant un dépôt plus étendu qui sera par la suite gravé, par exemple par un laser, cette deuxième méthode étant utilisée pour le procédé de fabrication présenté ici.

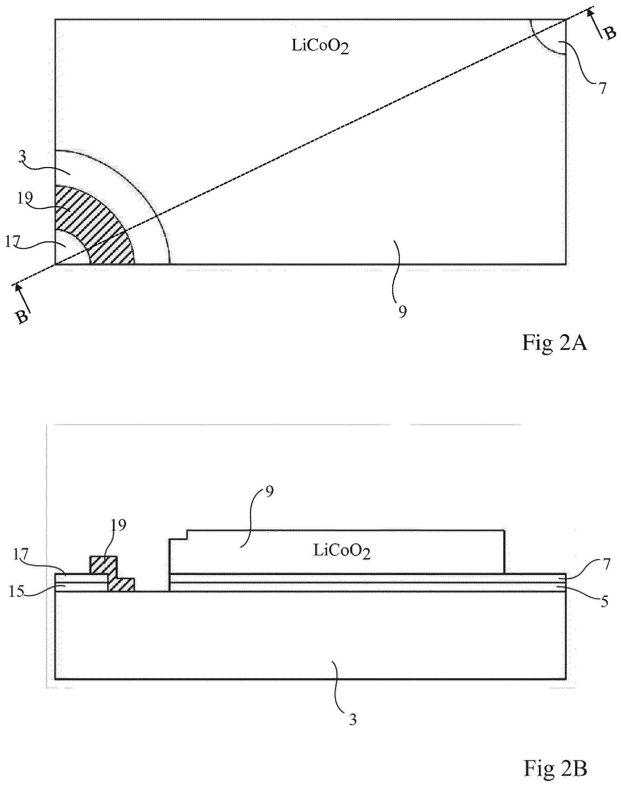

Les figures 2A et 2B sont respectivement une vue de dessus et une vue en coupe illustrant la batterie des figures 1A et 1B à une étape intermédiaire de sa fabrication. La figure 2A est une vue de dessus de la figure 2B. La figure 2B est une vue en coupe selon la ligne B-B de la figure 2A. A ce stade, on a successivement réalisé les étapes suivantes :
- déposer sur le substrat 3 une couche d'accrochage et une couche de métal, par exemple en platine, puis graver une tranchée afin d'obtenir les couches 5, 7 sur la plus grande partie du substrat 3 et les couches 15, 17 sur l'autre partie ;
- déposer une couche de cathode 9 sur la plus grande partie de la couche 7 ; et
- déposer une couche, par exemple en cuivre dans la tranchée séparant les couches 5, 7 des couches 15, 17 et en débordement sur la couche 17 et la couche de cathode 9, puis la graver pour former la couche 19.

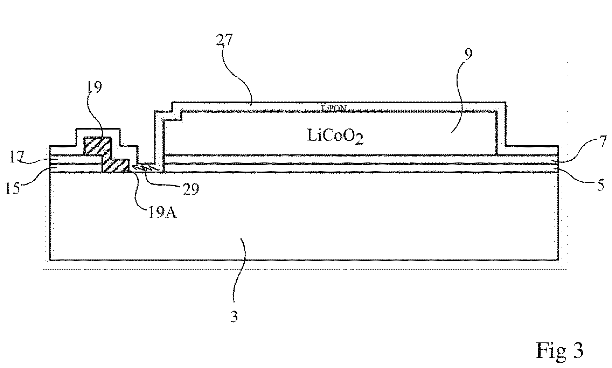

La figure 3 est une vue en coupe illustrant la structure de la figure 2 à une étape ultérieure de fabrication. Une couche de LiPON 27 est déposée sur la structure. De façon classique, ce dépôt est effectué par dépôt plasma, procédé couramment nommé PVD (de l'anglais Physical Vapour Déposition). Pendant cette étape, les couches conductrices, c'est-à-dire les couches 7 et 9, formant la cathode et le contact de cathode, et les couches 17 et 19, formant le contact d'anode, se chargent sous l'effet du plasma présent dans le réacteur de dépôt. Cependant, les couches 7 et 9 ont une plus grande surface que les couches 17 et 19. Ceci entraine une différence de potentiel entre les contacts de cathode et d'anode, et un risque de formation d'arcs électriques. Plus particulièrement, des arcs électriques, symbolisés par une flèche 29, sont susceptibles de se former à travers la portion de la couche 27 comprise entre l'extrémité 19A de la couche de cuivre 19 et l'extrémité en regard de la couche conductrice 7. De tels arcs électriques entraînent l'apparition de défauts, par exemple la formation de cavités dans la couche 27.

Après l'étape de la figure 3, on arrive à la structure des figures 1A et 1B en procédant à la gravure de la couche 27 de LiPON pour former la couche d'électrolyte 13, puis à un dépôt localisé de lithium pour former la couche d'anode 23 présenté en relation avec la figure 1B. Pendant l'étape de dépôt de lithium, du lithium pénètre dans les cavités réalisées dans la couche d'électrolyte 13 par les éventuels arcs électriques 29 formés lors de l'étape de la figure 3, et ceci peut créer des courts-circuits entre l'anode et la cathode de la batterie. Une solution possible à ce problème est d'augmenter la distance entre l'extrémité 19A de la couche de cuivre 19 et l'extrémité en regard de la couche conductrice 7, mais cela réduit la surface disponible pour la couche de cathode 9 et donc la capacité de la batterie, pour une surface de substrat donnée.

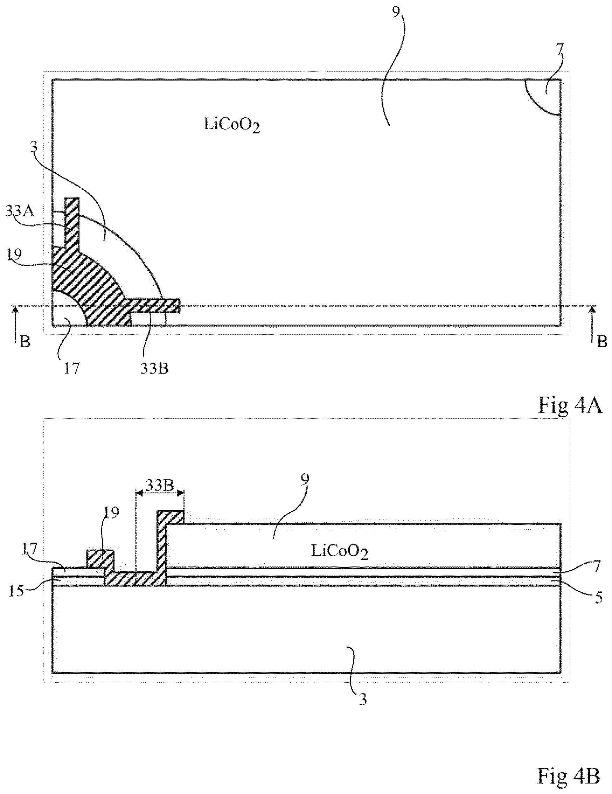

Les figures 4A et 4B sont respectivement une vue de dessus et une vue en coupe illustrant la batterie des figures 1A et 1B à une étape intermédiaire d'un mode de réalisation d'un procédé de fabrication de cette batterie. La figure 4B est une vue en coupe de la figure 4A selon la ligne B-B de la figure 4A. A ce stade, on a successivement réalisé les mêmes étapes que celles réalisées à l'étape illustrée par les figures 2A et 2B. Cependant, pour pallier le problème décrit en relation avec la figure 3, le contact de cathode et le contact d'anode sont court-circuités. Ainsi, lors du dépôt par plasma de la couche de LiPON, les contacts de cathode et d'anode restent à un même niveau de potentiel tandis qu'ils se chargent. Pour créer ce court-circuit, dans le mode de réalisation représenté, la couche de cuivre 19 comprend au moins une extension dont l'extrémité repose sur une portion de la couche de cathode 9. Dans le cas représenté en figures 4A et 4B, la couche 19 comprend deux extensions 33A et 33B. Les extensions 33A et 33B ont par exemple la forme de languettes.

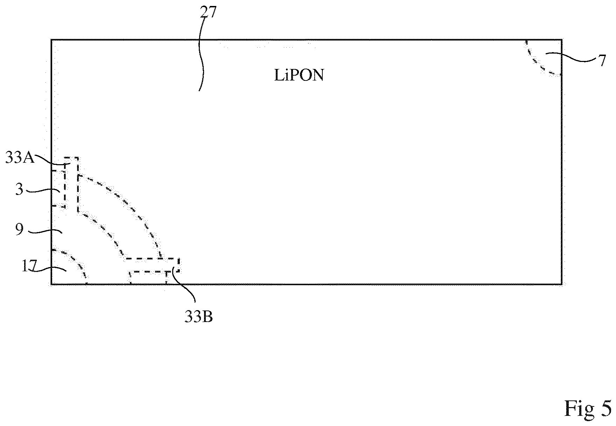

La figure 5 est une vue de dessus de la structure des figures 4A et 4B à une étape ultérieure de fabrication. Une couche de LiPON 29 est déposée sur la structure, par exemple par dépôt plasma. La forme des différentes couches constituant la structure de la figure 4A est désignée en pointillés. Pendant le dépôt de LiPON, les couches conductrices, telles que les couches de platine 7 et 17, la couche de cuivre 19 et la couche de cathode 9, se chargent. Toutes ces couches étant court-circuitées, elles sont toutes au même potentiel. On évite ainsi la formation d'arcs électriques et donc de défauts dans la couche de LiPON.

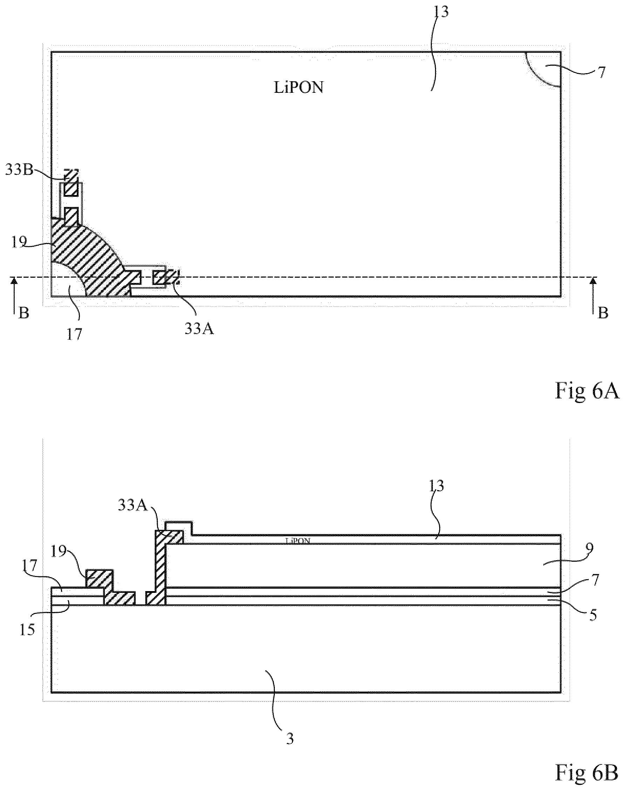

Les figures 6A et 6B sont respectivement une vue de dessus et une vue en coupe de la structure de la figure 5 à une étape encore ultérieure de fabrication. La figure 6A est une vue de dessus. La figure 6B est une vue en coupe selon la ligne B-B de la figure 6A. A cette étape, la couche de LiPON 27 est gravée localement de façon à rendre accessibles la couche conductrice 7, la couche conductrice 17, la couche de cuivre 19 et une portion des extensions 33A et 33B. Puis, les extensions 33A et 33B sont sectionnées, par exemple par gravure laser. Ainsi, le contact d'anode est déconnecté du contact de cathode. Des portions d'extensions 33A et 33B peuvent subsister sur la couche de cathode 9 et sous la couche 13. Ces portions sont désignées par des pointillés et sont hachurées sur la figure 6A. Les portions restantes des extensions 33A et 33B peuvent dépasser ou être à l'aplomb de la couche 13.

Dans des étapes ultérieures, la couche d'anode 23, présentée en relation avec la figure 1B, est déposée de manière localisée sur la structure de telle sorte que les extensions 33A et 33B ne soient pas en contact électrique avec la couche conductrice 7 au niveau de la zone 11. Dans le cas d'un dépôt de la couche 23 recouvrant tout ou partie des éléments suscitées, l'homme de l'art aura prévu une isolation électrique adéquate entre ces éléments pour éviter le court-circuit de l'anode et de la cathode à cette étape du procédé. Puis, la couche d'encapsulation 25, présentée en relation avec les figures 1A et 1B, est mise en place.

Un avantage de ce mode de réalisation est de permettre la réduction des distances séparant les couches 9, 13 et 19, et donc d'accroître la surface allouable aux autres éléments de la batterie.

Des modes de réalisation particuliers ont été décrits. Diverses variantes et modifications apparaîtront à l'homme de l'art. En particulier, toutes autres méthodes permettant de court-circuiter temporairement les contacts de cathode et d'anode pendant le dépôt de LiPON pourront être utilisées.

## Revendications

1. Procédé de fabrication d'une batterie au lithium (1) comprenant le dépôt par plasma de LiPON (13) sur une structure comprenant une zone de prise de contact d'anode (21) et une zone de prise de contact de cathode (11), comprenant les étapes suivantes :
avant le dépôt de LiPON (13), prévoir des portions conductrices (33A, 33B) court-circuitant la zone de prise de contact d'anode et la zone de prise de contact de cathode ; et
après le dépôt de LiPON (13), couper lesdites portions.

2. Procédé selon la revendication 1, dans lequel la batterie comprend une cathode (9) en LiCoO₂.

3. Procédé selon la revendication 1 ou 2, dans lequel la batterie comprend une anode (23) en lithium.

4. Procédé selon l'une quelconque des revendications 1 à 3, dans lequel les zones de prise de contact d'anode (21) et de cathode (11) sont en platine.

5. Procédé selon l'une quelconque des revendications 1 à 4, dans lequel la batterie comprend en outre entre l'anode (23) et la zone de prise de contact d'anode (21) une couche de métal (19).

6. Procédé selon la revendication 5, dans lequel la couche de métal (19) est en cuivre.

7. Procédé selon l'une quelconque des revendications 1 à 6, dans lequel la batterie (1) a une forme rectangulaire.

8. Procédé selon la revendication 7, dans lequel la zone de prise de contact d'anode (21) et la zone de prise de contact de cathode (11) sont disposées dans des coins opposés de la batterie (1).

9. Procédé selon la revendication 7, dans lequel la zone de prise de contact d'anode (21) et la zone de prise de contact de cathode (11) sont disposées dans des coins adjacents de la batterie (1).

10. Procédé selon l'une quelconque des revendications 1 à 9, dans lequel les portions conductrices (33A, 33B) sont coupées pendant une étape de gravure du LiPON (13).

## Patentansprüche

1. Verfahren zur Herstellung einer Lithiumbatterie (1), das die Plasmaabscheidung von LiPON (13) auf einer Struktur aufweist, die eine Anodenkontaktzone (21) und eine Kathodenkontaktzone (11) aufweist, wobei das Verfahren die folgenden Schritte aufweist:
vor der Abscheidung von LiPON (13) werden leitfähige Teile (33A, 33B) vorgesehen, die die Anodenkontaktzone und die Kathodenkontaktzone kurzschließen; und
nach der Abscheidung von LiPON (13) werden die Teile geschnitten.

2. Verfahren nach Anspruch 1, bei dem die Batterie eine Kathode (9) aus LiCoO₂ aufweist.

3. Verfahren nach Anspruch 1 oder 2, bei dem die Batterie eine Anode (23) aus Lithium aufweist.

4. Verfahren nach einem der Ansprüche 1 bis 3, bei dem die Anodenkontaktzone (21) und die Kathodenkontaktzone (11) aus Platin hergestellt sind.

5. Verfahren nach einem der Ansprüche 1 bis 4, bei dem die Batterie zusätzlich zwischen der Anode (23) und der Anodenkontaktzone (21) eine Metallschicht (19) aufweist.

6. Verfahren nach Anspruch 5, bei dem die Metallschicht (19) aus Kupfer hergestellt ist.

7. Verfahren nach einem der Ansprüche 1 bis 6, bei dem die Batterie (1) eine rechteckige Form aufweist.

8. Verfahren nach Anspruch 7, bei dem die Anodenkontaktzone (21) und die Kathodenkontaktzone (11) in entgegengesetzten Ecken der Batterie (1) angeordnet sind.

9. Verfahren nach Anspruch 7, bei dem die Anodenkontaktzone (21) und die Kathodenkontaktzone (11) in benachbarten Ecken der Batterie (1) angeordnet sind.

10. Verfahren nach einem der Ansprüche 1 bis 9, bei dem die leitenden Teile (33A, 33B) in einem Schritt des Ätzens des LiPON (13) geschnitten werden.

## Claims

1. Process for manufacturing a lithium battery (1) comprising the plasma deposition of LiPON (13) on a structure comprising an anode contact zone (21) and a cathode contact zone (11), comprising the following steps:
before the deposition of LiPON (13), conductive portions (33A, 33B) are provided that short the anode contact zone and the cathode contact zone; and
after the deposition of LiPON (13), said portions are cut.

2. Process according to Claim 1, in which the battery comprises a cathode (9) made of LiCoO₂.

3. Process according to Claim 1 or 2, in which the battery comprises an anode (23) made of lithium.

4. Process according to any one of Claims 1 to 3, in which the anode contact zone (21) and the cathode contact zone (11) are made of platinum.

5. Process according to any one of Claims 1 to 4, in which the battery additionally comprises, between the anode (23) and the anode contact zone (21), a metal layer (19).

6. Process according to Claim 5, in which the metal layer (19) is made of copper.

7. Process according to any one of Claims 1 to 6, in which the battery (1) is rectangular in shape.

8. Process according to Claim 7, in which the anode contact zone (21) and the cathode contact zone (11) are positioned in opposite corners of the battery (1).

9. Process according to Claim 7, in which the anode contact zone (21) and the cathode contact zone (11) are positioned in adjacent corners of the battery (1).

10. Process according to any one of Claims 1 to 9, in which the conductive portions (33A, 33B) are cut in a step of etching the LiPON (13).
